# EUROPEAN PATENT APPLICATION

(11) **EP 1 278 130 A1**
(43) Date of publication of application: **22.01.2003**
(21) Application number: 02016102.2
(22) Date of filing: 15.03.2000
(51) Int. Cl.: G06F 17/24, G06F 17/28, G06F 17/60

(54) **Multilingual vehicle servicing equipment**

(30) Priority: 15.03.1999 US 267616
(62) Divisional of application: 00914962.6
(71) Applicant: Snap-On Technologies, Inc., Lincolnshire, IL 60069 (US)
(72) Inventor: De Bellefeuille, Jean, Brunswick, ME 04011 (US)
(74) Representative: Nöth, Heinz

(57) **Abstract**

A multilingual software application for controlling vehicle servicing equipment includes a plurality of dynamic link libraries corresponding to supported national languages. The multilingual application is configured to receive input selecting one of the supported national languages, load the corresponding dynamic link library, and redisplay during run-time operating instructions for the vehicle servicing equipment in the selected national language. An international language management system is provided to develop, maintain, and synchronize the dynamic link libraries based on processing resource files from which the dynamic link libraries are compiled.

## Description

### RELATED APPLICATION

This application is a continuation-in-part of U.S. Patent Application Serial No. 08/857,725, entitled "Computerized Automotive Service System," filed on May 16, 1997 by Jean de Bellefeuille *et al*.

### FIELD OF THE INVENTION

The invention relates to vehicle diagnostics and servicing and, more particularly, to multilingual vehicle servicing apparatus and methodology.

### BACKGROUND OF THE INVENTION

The trends of computerization and globalization have spurred highly competitive pressures in many areas of the economy, including the automotive service repair industry. Systems for operating vehicle servicing and other diagnostic equipment are being developed to troubleshoot and correct problems affecting the operation of a vehicle. For example, vehicle servicing equipment is useful for diagnosing engine and emission conditions and for correcting alignment, balancing and other suspension conditions affecting the wheels of a vehicle.

Market demands continue to force automotive service repair equipment manufacturers to develop increasingly sophisticated equipment to meet their customers' needs. Consequently, computers are introduced both to control the equipment and provide a user-friendly interface for a mechanic to operate and interact with the equipment. The user interface involves displaying operating instructions and prompts to the mechanic and receiving input from the mechanic for a desired operation. For example, wheel alignment systems are designed to adjust the wheels of a vehicle for optimum handling, safety and minimum tire wear. Typically, a wheel alignment system includes sensors for measuring the relative angles between the wheels of the vehicle. A computer application running on a computer within the wheel alignment system is responsible for processing the angle measurements from the sensors, displaying information about the measured alignment, and providing operating instructions that guide the mechanic through the alignment process.

The globalization of the automotive service repair industry means that many potential customers will want their user-interface to be in a language other than American English. Conventional computerized vehicle servicing equipment, however, employs a user interface that is fixed to a single language. In accordance with one approach, a developer of the vehicle servicing software application makes a complete copy of the source code, hires translators to translate all the literal strings in the source code, and recompiles the translated source code into a new, "localized" vehicle servicing application that is fixed to a particular foreign language.

Creating a separate, translated version of a vehicle service application is especially disadvantageous in situations involving border towns and bilingual areas where it is common for mechanics of the same shop to use different languages, for example French and English in Quebec, Canada. Such computerized vehicle servicing equipment therefore requires at least two separate copies of the application, for example, one for the French version, and the other for the English version, doubling disk space and memory requirements and increasing the cost of the system. This disadvantage is particularly acute at trade shows in which is desirable to demonstrate the equipment with a user interface in any one of a multiplicity of supported languages.

One reference, Kano, *N., Developing International Software for Windows '95 and Windows NT*, Microsoft Press, 1995, pp. 115-147; ISBN 1-55615-840-8, discusses a technique whereby a single application can be developed to support different languages and allow the user to switch languages at run-time, but the techniques and source code disclosed therein only allows new windows and screens to be presented in the new language. Previous windows and screens, however, are still displayed in the old language. Since mechanics desire to read the operating instructions for their vehicle servicing equipment in their own preferred language notwithstanding whether the window was previously opened in another language, the disclosure of Kano, as is. has not been found useful for the field of multilingual vehicle servicing equipment.

Furthermore, producing the versions of the translated applications is cumbersome and expensive by copying and translating the source code, because it is necessary to hire programmers who are proficient a foreign language or translators who are proficient in a programming language. Accordingly, tools, such as the APPLEGLOT™ tool available from Apple Corp., have been developed to extract literal strings from the source code of the "base" application, present them to a translator for translation, and merge the translated string into a copy of the source code file. The translated source code files are then compiled and linked to produce the translated version of the application.

Often these techniques are difficult to use because they present lists of literal strings that are disembodied from their context. Since the meaning of a word or phrase is often context-dependent; the translators sometimes lack enough information to make a proper translation of the word or phrase. Another difficulty is due to repetitions of literal strings. Although most repetitions of the same literal strings will be translated the same way, automatically copying the translated siting for all instances of the original literal string is problematic because the best rendition of the string might vary from context to context.

Another disadvantage with such techniques, moreover, is incurred when the base application is updated for a new release, for example, to add new features to a vehicle servicing application. In this situation, the entire translation process is repeated for every literal string in the application even though the update to the source code files of the base application only added or modified a few literal strings. Consequently, the literal strings that are not modified, constituting a majority of the literal strings in the base application, must be translated again at considerable expense. Furthermore, this retranslation creates an opportunity for inconsistent translations and other errors to be introduced. Even if the translation of literal strings for the previous version are printed out, it is difficult to consult the print out to determine whether a particular literal string in the latest version of the base application has been translated or needs translation.

### SUMMARY OF THE INVENTION

There exists a need for a multilingual wheel alignment system with a run-time capability of switching the language of all its windows components. There is also a need for a wheel alignment capable of switching the language in which operating instructions and prompts are displayed without requiring multiple copies of the application for each supported national language.

In accordance with one aspect of the invention, these and other needs are addressed by a computerized multilingual wheel alignment system. The multilingual wheel alignment system includes wheel alignment equipment having sensors mountable respectively on at least two wheels of a vehicle for measuring alignment angles of the wheels. The wheel alignment equipment is configured for providing angle measurement signals indicative of an angle between planes of the wheels and a reference direction based on the measured alignment angles. The multilingual wheel alignment system also includes a computer system that is coupled to the wheel alignment equipment and configured for controlling the wheel alignment equipment and displaying operating instructions for the wheel alignment equipment based on the angle measurement signals in the selected national language.

The computer system has a computer-readable medium storing dynamic link libraries corresponding to respective national languages. The computer system is configured to: present a user interface for displaying a selection of the national languages and for receiving input selecting one of the national languages, load one of the dynamic link libraries corresponding to the selected national languages, and redisplay during run time the operating instructions for the wheel alignment equipment in the selected national language based on the dynamic link libraries corresponding to the selected national language. Use of run-time loadable dynamic link libraries enables a single multilingual wheel alignment application to support multiple languages.

In one embodiment, the computer system is configured to close display components in a national language and reload the display component in a selected national language in response to input selecting the national language. Closing and reloading display components results in a complete language switching of all the components of the user interface of the multilingual wheel alignment application.

In addition, a need exists for maintaining synchronization of translations to literal strings between updates to the base application. There are also needs for a convenient way to avoid unnecessary retranslations of unmodified literal strings in the base application. identify which literal strings need translation, selectively eliminate duplicate strings, and provide useful context information about each literal string

These and other needs are addressed by another aspect of the present invention pertaining to a computer-implemented method and a computer-readable medium bearing instructions for maintaining a multilingual application. The methodology for maintaining a multilingual application includes building a database based on a source resource file for the multilingual application. The source resource file specifies a user interface component and an associated source language text for the application, and the database includes a source language entry for the associated source language text and a corresponding target language entry. The methodology further includes presenting an interface for editing the database to produce a target language entry corresponding to the source language entry and generating a target resource file based on the source resource file and the target language entry for inclusion into a version of the multilingual application. By building a database that stores the source language text and the corresponding target language text, the translation from a previous version of the multilingual application can be reused if the source language text was not modified, thereby avoiding unnecessary retranslations of unmodified source language text.

One implementation also includes determining whether the target language entry is up-to-date with respect to the source language entry by: updating a source revision number when the source language entry is updated while building the database; updating a target revision number when the target language entry is updated while presenting the interface for editing; and comparing the source revision number and the target revision number. Thus, a status cell indicating whether the target language entry is up-to-date can be displayed, directing the translator's attention to those target language entries that need translation.

Another implementation includes parsing the source resource file to identify a source literal string of the source language text and a corresponding identifier and generating the source language entry to include the literal string and the identifier. The identifier is compared with other identifiers already in the database so as to maintain a single source language entry for the identifier.

Still another implementation includes automatically generating a context note identifying a user interface component encompassing the literal string; and displaying the context note associated with literal string indicated by the identifier. This context note is informative to translators because the user interface component, such as a dialog box, that encompasses the literal string is displayed.

Additional needs addressed and advantages attained by the present invention will be set forth in part in the description that follows, and in part, will become apparent upon examination or may be learned by practice of the invention. The objects and advantages of the invention may be realized and obtained by means of the instrumentalities and combinations particularly pointed out in the appended claims.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a schematic diagram of a wheel alignment system.
FIG. 2 depicts a computer system upon which an embodiment of the present invention can be implemented.
FIG. 3 is a flowchart of a multilingual wheel alignment system with a run-time language switching capability in accord with the invention.
FIG. 4 is a data flow diagram of an international language management system implemented in the invention.
FIG. 5 is a high-level flowchart of the international language management system.
FIG. 6 is a flowchart of building a phrase database by the international language management system per the invention.
FIG. 7(a) is a snapshot of a window in a user-interface for the international language management system.
FIG. 7(b) is a snapshot of another window in the user-interface for the international language management system.

### DESCRIPTION OF THE PREFERRED EMBODIMENT

Methods and apparatus for operating and maintaining multilingual applications are described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

### HARDWARE OVERVIEW

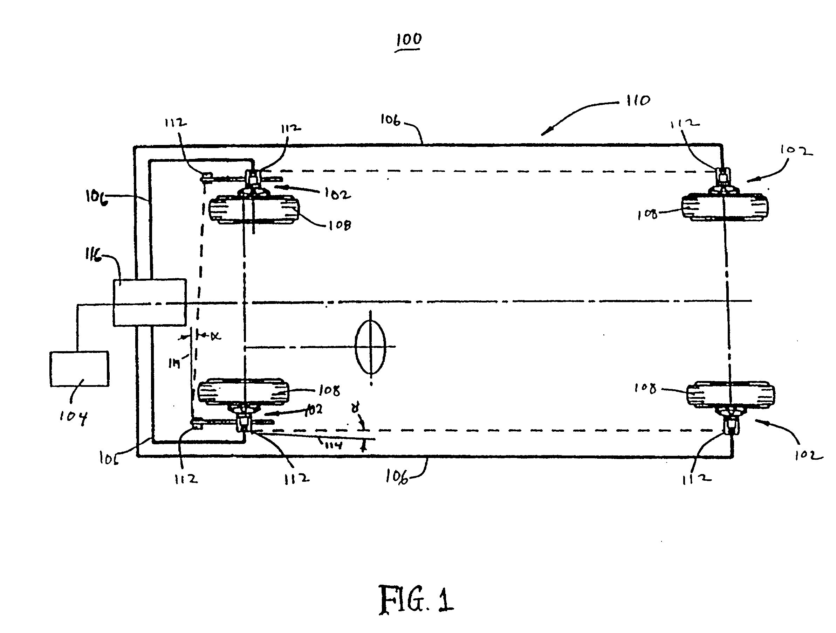

FIG. 1 depicts a multilingual wheel alignment system 100 as an example of a multilingual vehicle servicing system constructed in accordance with the invention. The multilingual wheel alignment system 100 includes wheel alignment equipment 102, a computer system 104, and a communications infrastructure 106 for transmitting information between the wheel alignment equipment 102 and the computer system 104. The wheel alignment equipment 102 includes sensors 112 mountable and mounted on at least two of the wheels 108 that support a vehicle 110 on a running surface. The sensors 112 measure angles α between the planes of the wheels 108 and a reference direction 114 and provide angle measurement signals indicative of the measured angles α.

The computer system 104 includes an interface card 116 coupled to a communications infrastructure 106 for controlling the operation of the wheel alignment equipment 102 and receiving signals therefrom. The communications infrastructure 106 can comprise coaxial cables, copper wire, fiber optics, or other wireless links that connect and transmit the angle measurement signals between the wheel alignment equipment 102 and the computer system 104. The computer system 104 is further configured to execute a multilingual wheel alignment application for receiving the angle measurement signals through the interface card 116 and presenting a user interface for displaying the wheel alignment angle data and operating instructions in a selected national language.

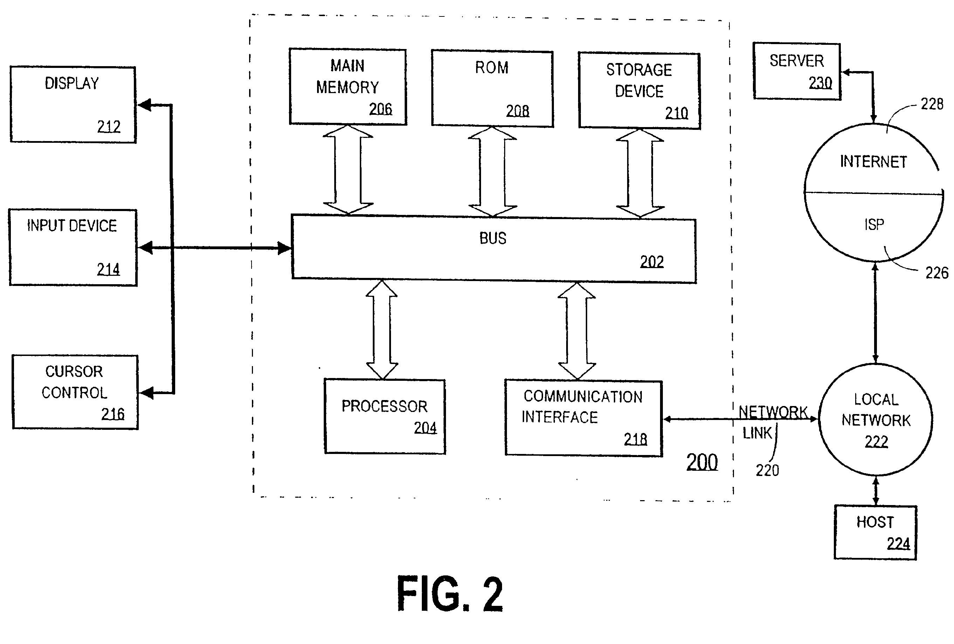

In one embodiment, the computer system 104 is implemented with a Windows 95 or Windows-NT PC with 16 MB of RAM and 4 MB of free hard disk space, but the present invention is not limited to any particular implementation of a computer system. FIG. 2 is a block diagram that illustrates a computer system 200 upon which an embodiment of the invention may be implemented. For example, computer system 200 can be used to implement computer 104 in a multilingual vehicle service system. As another example, computer system 200 can be used to host a development system for maintaining the multilingual application software for later use by computer 104.

Computer system 200 includes a bus 202 or other communication mechanism for communicating information, and a processor 204 coupled with bus 202 for processing information. Computer system 200 also includes a main memory 206, such as a random access memory (RAM) or other dynamic storage device, coupled to bus 202 for storing information and instructions to be executed by processor 204. Main memory 206 also may be used for storing temporary variables or other intermediate information during execution of instructions to be executed by processor 204. Computer system 200 further includes a read only memory (ROM) 208 or other static storage device coupled to bus 202 for storing static information and instructions for processor 204. A storage device 210, such as a magnetic disk or optical disk, is provided and coupled to bus 202 for storing information and instructions.

Computer system 200 may be coupled via bus 202 to a display 212, such as a cathode ray tube (CRT), for displaying information to a computer user. An input device 214, including alphanumeric and other keys, is coupled to bus 202 for communicating information and command selections to processor 204. Another type of user input device is cursor control 216, such as a mouse, a trackball, or cursor direction keys for communicating direction information and command selections to processor 204 and for controlling cursor movement on display 212. This input device typically has two degrees of freedom in two axes, a first axis (e.g., *x*) and a second axis (e.g., *y*), that allows the device to specify positions in a plane.

The invention is related to the use of computer system 200 for operating and maintaining multilingual applications. According to one embodiment of the invention, operating and maintaining multilingual applications are provided by computer system 200 in response to processor 204 executing one or more sequences of one or more instructions contained in main memory 206. Such instructions may be read into main memory 206 from another computer-readable medium, such as storage device 210. Execution of the sequences of instructions contained in main memory 206 causes processor 204 to perform the process steps described herein. One or more processors in a multi-processing arrangement may also be employed to execute the sequences of instructions contained in main memory 206. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 204 for execution. Such a medium may take many forms, including but not limited to non-volatile media, volatile media, and transmission media. Non-volatile media include, for example, optical or magnetic disks, such as storage device 210. Volatile media include dynamic memory, such as main memory 206. Transmission media include coaxial cables, copper wire and fiber optics, including the wires that comprise bus 202. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 204 for execution. For example, the instructions may initially be borne on a magnetic disk of a remote computer. The remote computer can load the instructions into its dynamic memory and send the instructions over a telephone line using a modem. A modem local to computer system 200 can receive the data on the telephone line and use an infrared transmitter to convert the data to an infrared signal. An infrared detector coupled to bus 202 can receive the data carried in the infrared signal and place the data on bus 202. Bus 202 carries the data to main memory 206, from which processor 204 retrieves and executes the instructions. The instructions received by main memory 206 may optionally be stored on storage device 210 either before or after execution by processor 204.

Computer system 200 also includes a communication interface 218 coupled to bus 202. Communication interface 218 provides a two-way data communication coupling to a network link 220 that is connected to a local network 222. For example, communication interface 218 may be an integrated services digital network (ISDN) card or a modem to provide a data communication connection to a corresponding type of telephone line. As another example, communication interface 218 may be a local area network (LAN) card to provide a data communication connection to a compatible LAN. Wireless links may also be implemented. In any such implementation, communication interface 218 sends and receives electrical, electromagnetic or optical signals that carry digital data streams representing various types of information.

Network link 220 typically provides data communication through one or more networks to other data devices. For example, network link 220 may provide a connection through local network 222 to a host computer 224 or to data equipment operated by an Internet Service Provider (ISP) 226. ISP 226 in turn provides data communication services through the world wide packet data communication network, now commonly referred to as the "Internet" 228. Local network 222 and Internet 228 both use electrical, electromagnetic or optical signals that carry digital data streams. The signals through the various networks and the signals on network link 220 and through communication interface 218, which carry the digital data to and from computer system 200, are exemplary forms of carrier waves transporting the information.

Computer system 200 can send messages and receive data, including program code, through the network(s), network link 220 and communication interface 218. In the Internet example, a server 230 might transmit a requested code for an application program through Internet 228, ISP 226, local network 222 and communication interface 218. In accordance with the invention, one such downloaded application provides for operating and maintaining multilingual applications as described herein. The received code may be executed by processor 204 as it is received, and/or stored in storage device 210, or other non-volatile storage for later execution. In this manner, computer system 200 may obtain application code in the form of a carrier wave.

### MULTILINGUAL WHEEL ALIGNMENT APPLICATION

A multilingual wheel alignment application is a computer program that is executed by computer system 104 for interfacing a mechanic with the wheel alignment equipment 102. Specifically, the multilingual wheel alignment application is configured for receiving measurement signals from the wheel alignment equipment 102, processing the signals, and displaying, in a selected national language, wheel alignment data based on the signal and operating instructions that guide the mechanic in using the wheel alignment equipment 102. Preferably, the multilingual wheel alignment application is implemented as a Windows 95™ or Windows NT™ application, although the present invention is not limited to this operating system. For example, the multilingual wheel alignment application may be implemented as a Macintosh™ windows application.

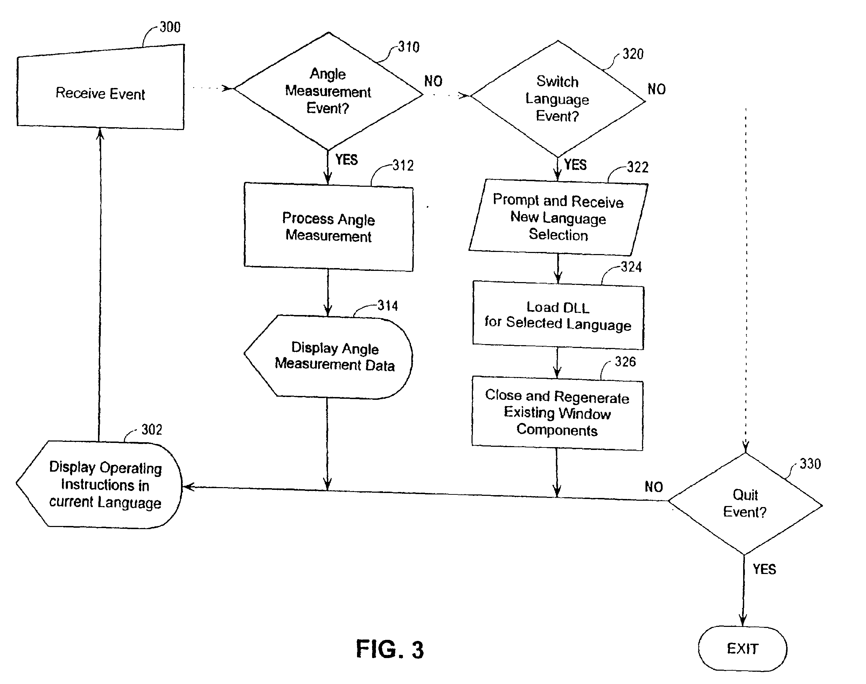

Like most other windows applications, the multilingual wheel alignment application is implemented with an "event loop" that processes messages as they occur within the application. FIG. 3 is a flowchart depicting portions of an event loop within one embodiment of a multilingual wheel alignment application. At step 300, an event is received by the multilingual wheel alignment application in the form of a message. The messages that are processed within the event loop are generally generated by the operating system in response to input and output such as mouse movements. menu selections, and window painting. The message processing illustrated in FIG. 3 involves the events of receiving an angle measurement from the wheel alignment equipment 102, receiving a request from the user to switch the national language, and receiving a request from the user to quit the application. It is to be understood that the event loop illustrated in FIG. 3 represents only a few of the messages that are processed by the multilingual wheel alignment equipment.

At step 310, the received message is checked to determine whether the message encodes an angle measurement event. This message is generated in response to angle measurement signals that are received from the wheel alignment equipment 102 through the interface card 116. If a message for an angle measurement event was received, then the angle measured is processed (step 312) and then displayed in a window on the screen for the mechanic (step 314). Consequently, the mechanic is informed about the wheel alignment of the vehicle under test.

At step 320, the received message is checked to determine whether the message encodes a request to switch the national language of the multilingual wheel alignment application. This message is generated in response to a user's interaction with the user interface, for example, by selecting a menu entry within the menu structure. In response, a list of the supported national languages is displayed for the user and the user's selection of a particular national language is received (step 322). Once the selection of the new national language has been made, a dynamic link library containing the text for the selected national language is loaded (step 324). The appropriate dynamic link library may be determined by associating a three-letter code for each language, such as "usa" for American English and "fra" for French and naming the dynamic link library to include the corresponding three-letter code. For example, an American English language dynamic link library may be named "xyzusa.dll" while the French version is called "xyzfra.dll". After the appropriate dynamic link library has been loaded, the existing windows and their components are shut down and regenerated (step 326). In contrast with the sample source code supplied by the N. Kano reference for non-vehicle servicing applications, shutting down the existing windows and regenerating the application windows causes the entire user interface to be redisplayed in the new language.

At step 330, the received message is checked to determine whether the message encodes a request to quit the multilingual wheel alignment application. This request may be generated, for example, in response to a user's selection of the "Exit" entry on the "File" menu, by double-clicking the application icon on the left of title bar for the main window, or by single-clicking the close icon (marked with an "X") on the right of the title bar. If the received message is indeed a quit message, then the multilingual wheel alignment application terminates.

At some point in the event loop, illustrated as step 302, instructions for operating the wheel alignment equipment 102 are displayed in the current language. This step may be performed upon every iteration through the event loop or conditionally in response to input prompted from the mechanic. In one embodiment, the text for the operating instructions is taken from. the language-specific dynamic link library that was loaded in step 324 based on the mechanic's selection of a national language. The multilingual wheel alignment application also includes class member functions that determine the appropriate code page, font name, and character sets for displaying text in the selected national language.

The language-specific dynamic link library is preferably generated from a language-specific resource file that associates the national language text in the form of character strings with a specific identifier. More specifically, a resource file is an application source file that specifies the various "resources" or window components used by the application such as icons, cursors, bitmaps, character strings, user-defined resources, menus, keyboard accelerators, dialog boxes, and fonts. In MICROSOFT™ Windows, a resource file is usually called a "resource script" because this kind of resource file is an ASCII representation of the specified resources. A resource compiler is provided to compile the resource script into binary data. Resource files are also used within other windowing operating systems, such as APPLE™ MACINTOSH™. TABLE 1 illustrates a portion of a resource file that may be used in a multilingual wheel alignment application:

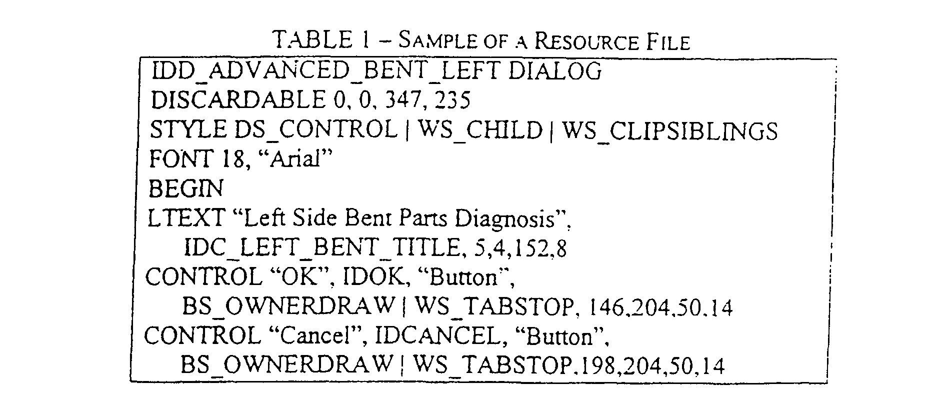

This sample of a resource file set forth in TABLE 1 includes a definition of a dialog box, which is associated with the IDD_ADVANCED_BENT_LEFT identifier. This dialog box includes at least three components, a label text (LTEXT) for the title of the dialog box and two controls (CONTROL) for buttons within the dialog box. Controls are also known as "widgets" in some windowing operating systems, such as X WINDOWS™. The title of the dialog box in the American English language is given by the literal string "Left Side Bent Parts Diagnosis" and is associated with the IDC_LEFT_BENT_TITLE identifier. The first button displays "OK" and is associated with the IDOK identifier; the second button displays "Cancel" and is associated with the IDCANCEL identifier. Typically, there will be several definitions of an OK button in the resource file, and in each case, the same literal string ("OK") and identifier (IDOK) are specified for each instance. The resource file definitions also include other information such as the coordinates and size of the window components, for example, the upper left coordinates (146, 204) for the 50x14 pixel OK button.

If all the national language strings are placed in the resource files, the base application code can reference the desired text in a language-neutral fashion by the identifiers in the resource files. For example, instead of embedding "Left Side Bent Pans Diagnosis" in the source code of the base application, which is fixed to a single language and difficult to translate, the base application would be coded to load the string identified by the IDC_LEFT_BENT_TITLE identifier, e.g. by a LoadString() library call.

Accordingly, the natural language text is not fixed within the base application but depends on the loaded dynamic link library that contains the compiled resource data. Therefore, the current language to display language components is selected by loading the appropriate language-specific dynamic link library. Consequently, multiple language specific dynamic link library eliminates the need for separately running applications. Since loading a new language-specific dynamic link library does not affect existing windows and their components, the existing windows are closed and regenerated using the newly loaded language-specific dynamic link library.

### INTERNATIONAL LANGUAGE MANAGEMENT SYSTEM

Accordingly, a multilingual wheel alignment application includes a number of language-specific dynamic link libraries that were compiled from corresponding language-specific resource files. One aspect of the present invention pertains to an international language management system for translating and synchronizing the resource files of the base application into the language-specific resource files when literal strings are added or modified when the base application is updated.

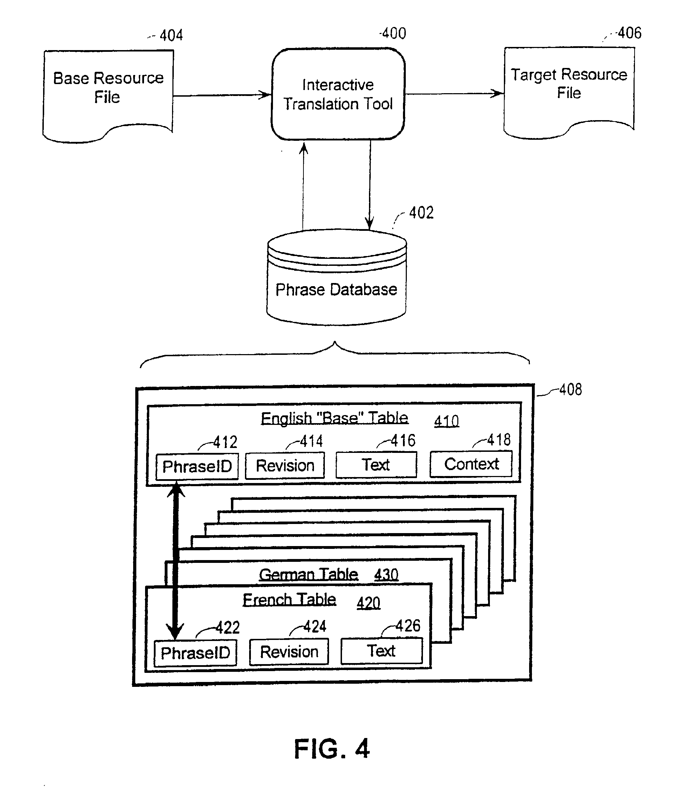

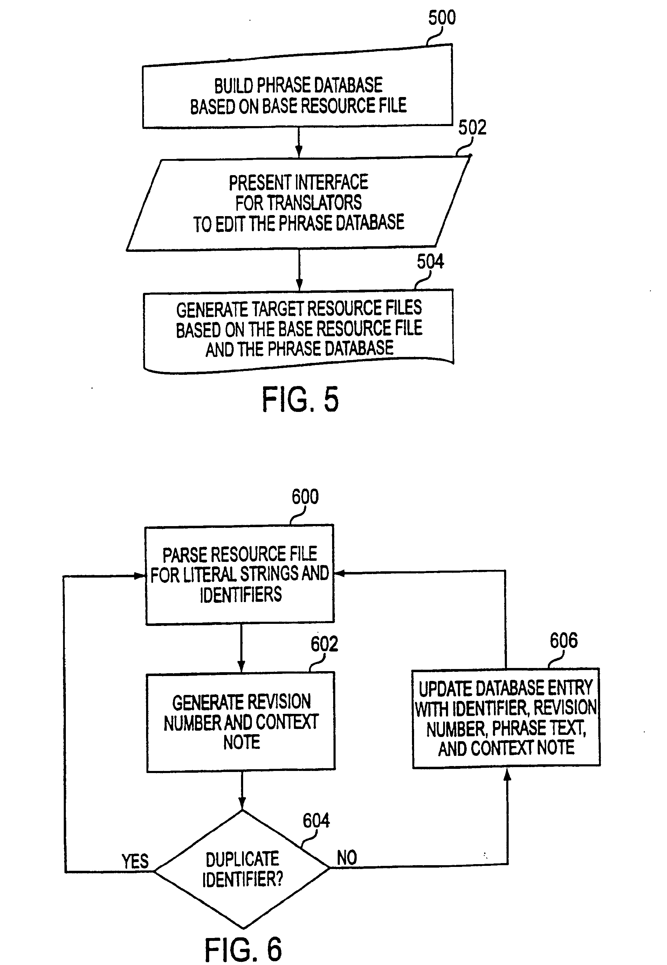

In order to avoid retranslation of previously translated literal strings when the base application is updated, an international language management system according to one embodiment illustrated in FIG. 4 includes an interactive translation tool 400 and a phrase database 402 for translating a base resource file 404 into a language-specific target resource file 406. More specifically in FIG. 5, the interactive translation tool 400 is responsible for building the phrase database 402 of the literal strings in the base resource file 404 (step 500), presenting an interface for translators to edit the phrase database 402 to store translations of the literal strings (step 502), and generate the target resource files 406 based on the original base resource file 404 and the translations in the phrase database 402. Translation of the literal strings of previous versions of the base resource file 404 are saved within the phrase database 402 and can be reused in generating the target resource file 406 for the most recent version of the multilingual wheel alignment application. By saving and reusing previously translated literal strings of the multilingual wheel alignment application, the cost involved with retranslating unmodified literal strings can be avoided.

### PHRASE DATABASE

According to one embodiment, the phrase database 402 is implemented within a database management system 408, such as MICROSOFT™ ACCESS™. In the database management system 408, data is stored in one or more data containers, each container contains records, and the data within each record is organized into one or more fields. In relational database systems, the data containers are referred to as tables, the records are referred to as rows, and the fields are referred to as columns. In object oriented databases, the data containers are referred to as object classes, the records are referred to as objects, and the fields are referred to as attributes. Other database architectures may use other terminology. Systems that implement the present invention are not limited to any particular type of data container or database architecture. However, for the purpose of explanation, the terminology and examples used herein shall be that typically associated with relational databases. Thus, the terms "table," "row," and "column" shall be used herein to refer respectively to the data container, record, and field.

In one embodiment, the database management system 408 includes a table for each national language supported by the international language management system. One of the tables is a base table 410 and the other tables are translation tables. The base table 410, which stores the literal strings extracted from the base resource file 404, is typically in the language of the source code developers, and the translation tables stores translations of the literal strings in other national languages.

For example, FIG. 4 depicts a database management system 408 containing a base table 410 for storing the literal strings of the base resource file 404 that was produced in the American English language by the software developers of the multilingual wheel alignment application. In this example, the relational database system 408 also includes a French table 420 for storing the French versions of the literal strings and a German table 430 for storing the German versions of the literal strings. The present invention, of course, is not limited to American English. French, and German but may include a table for any other human language, including Arabic, Canadian French, Chinese in traditional characters, Chinese in simplified characters, Czech, Danish, British English, Finnish, Greek, Hebrew, Italian, Japanese, Korean, Portuguese, Brazilian Portuguese, Slovene, Spanish, Latin American Spanish, Swedish, and Thai.

The base table 410 is organized so that the rows of the base table 410 correspond to distinct literal strings in the base resource file 404, and the columns of the base table 410 store information about each literal string in the base resource file 404. Referring to FIG. 6, the base table 410 is built by parsing the base resource file 404 to extract the literal strings, identifiers, and other information (step 600). The text 416 column stores the contents of the extracted literal string from the base resource file 404. For example, the literal string "OK" in the base resource file 404 is stored as "OK" in the text 416 field.

The phrase identifier 412 serves as a primary key value to identify each literal string in the base table and stores the identifier in the resource file that is associated with a particular literal string in the base resource file 404. With reference to the exemplary resource file of TABLE 1, the phrase identifier 412 for the literal string "Left Side Bent Parts Diagnosis" is IDC_LEFT_BENT_TITLE. the phrase identifier 412 for the literal string "OK" is IDOK, and the phrase identifier 412 for the literal string "Cancel" is IDCANCEL. As explained hereinafter, the phrase identifier 412 is useful for correlating the entries of translated strings in translation tables to entries in the base table 410 and for eliminating certain instances of duplicate strings.

At step 602, the revision number 414 and the context note 418 are generated for each literal string. The revision number 414 keeps track of the revision of the base application in which the literal string was first introduced. Each build of the phrase database 402 is associated with a monotonically increasing revision number. New literal strings, as identified by a common phrase identifier 412, that are added or modified in the base resource file 404 are given the revision number of the current build. However, literal strings in the base resource file 404 that are identical to the literal strings already in the base table 410, as identified by a common phrase identifier 412, maintain the old revision number, thereby indicating that these literal strings are not changed and do not require translation.

The context note 418 is automatically generated at step 602 to indicate the context in which the literal string was found. In one embodiment, the context note includes the identifier of the windows component that contains the literal string. With reference to the exemplary resource file of TABLE 1, the context note 418 for the literal string "Left Side Bent Parts Diagnosis" would contain IDD_ADVANCED_BENT_LEFT, which is the identifier of the dialog box that encompasses the literal string. As explained hereinafter, the context note 418 is later display to the translator to give a helpful indication of how the literal string is used in the application, specifically the user interface component encompassing the literal string.

It is not uncommon for a base resource file 404 to include multiple repetitions of standard literal strings whose translation should not vary from context to context. For example, every dialog box with an OK button will have respective representation in the resource file that includes the "OK" literal string in association with the IDOK identifier. In order to avoid translating the same standard literal string multiple times, one embodiment at step 604 removed duplicate entries if the phrase identifier 412 and the revision number 414 of a new entry is the same as the phrase identifier 412 and the revision number 414 of a previous entry. If this condition is satisfied, then execution loops back to step 600 where another literal string and identifier is parsed from the base resource file 404. Consequently, multiple entries for the same standard literal string are avoided, thereby allowing the standard literal string to be translated only once. For nonstandard literal strings that happen to share the same text but may vary in translation depending on the context, the software developer should give those literal strings different identifiers in the resource file to force the international language management system to generate separate entries in the phrase database 402.

On the other hand, if the phrase identifier 412 and the revision number 414 of a new entry are not the same as the phrase identifier 412 and the revision number 414 of a previous entry, then database entry indicated by the phrase identifier 412 is updated with the phrase identifier 412, the revision number 414, phrase text 416, and the context note 418. This condition is satisfied when a new literal string was added to the base resource file 404 (*i.e.,* different phrase identifiers 412) or when a literal string was modified (*i.e*., different revision numbers 414).

### TRANSLATION INTERFACE

After the phrase database 402 with the base table 410 has been built in step 500, the interactive translation tool 400 is ready to present a user interface to allow the translators to enter the appropriate translations into the appropriate entries of the translation tables (step 502). Alternatively, the functionality of the translation interface may be implemented in a separate application from the interactive translation tool 400, so that piece of the phrase database 402 can be distributed to geographical dispersed translators. Referring again to FIG. 4, a translation table such as French table 420 is organized so that the rows of the translation table correspond one-to-one with the rows of the base table 410 and the columns of the base table 410 store information about each translated literal string. Specifically, the columns include a phrase identifier 422, a revision number 424, and the text 426.

The phrase identifier 422 is used to link the row in the translation table 420 to the corresponding row in the base table 410. In a relational database implementation, the phrase identifier 422 stores the same values as the corresponding the phrase identifier 412 so as to allow use of an equijoin operation to correlate the translation with the original. The revision number 424 stores the revision number of the build in which the string was last translated, and the text 426 stores the foreign language text of the translation. In the case of a newly created database entry, the revision number 424 of foreign translation tables 420 and 430 is set to zero. Upon translation, the revision number 424 will be set to equal the revision number 414 of the corresponding entry in the base table 410.

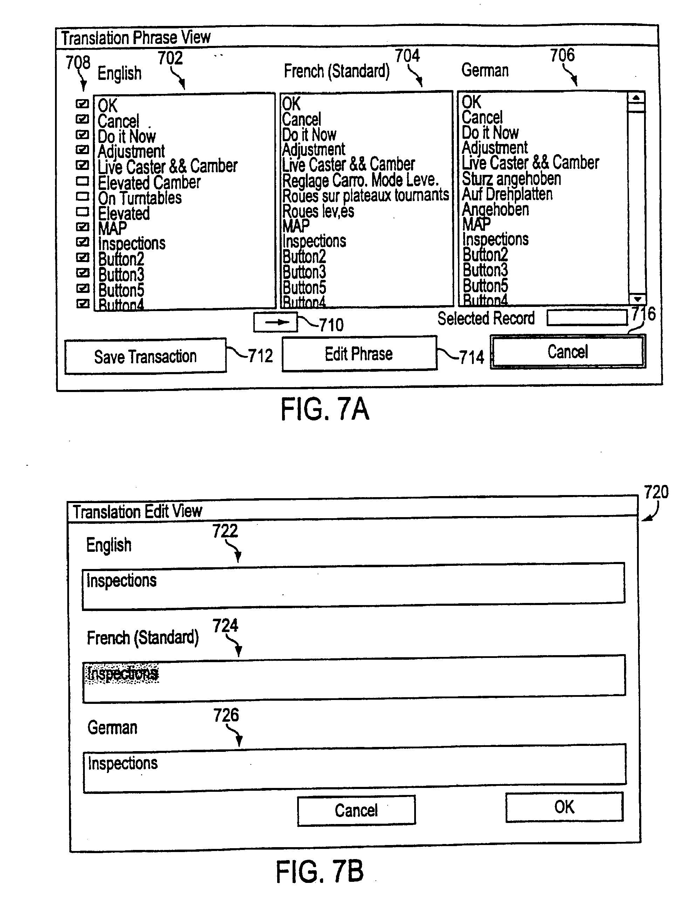

FIG. 7(a) depicts a translation phrase view dialog box 700 that is displayed in a user interface according to one embodiment of the present invention. The translation phrase view dialog box 700 provides a three-column format with a master column 702 on the left, a target language column 704 in the middle, and a reference column 706 on the right. The master column 702 displays the text of the literal string in the original language. The target language column 704 displays the corresponding translation for the current target language. The reference column 706 is reserved for displaying any additional information in aid of translation, such as the context notes 418 or translations of another language. Displaying the context notes is helpful because the context notes impart information about how the literal string is used, and displaying translations in another language is especially useful when the other language is closely related to the target language. For example, with American English and British English, many of the translations would be the same. In other embodiments, a plurality of reference columns 706 may be displayed, for example, with the context notes in one of the reference columns and the other language translation in another one of the reference columns.

The example illustrated in FIG. 7(a) displays American English literal strings of the base resource file 404, for example "On Turntables," in the master column 702. The ongoing French translations are displayed in the target language column 704, for example, "Roues sur plateaux toumants." The reference column 706 displays the German translations, for example "Auf Drehplatten."

At the far left, check boxes 708 are provided to indicate the translation status of entries in the target language column 704. A check in the check box 708 means that the literal string in the master column 702 needs to be translated and an unchecked check box 708 means the translation is considered to be current with the master column. The translation status is determined by comparing the base revision number 414 and the corresponding translation revision number 424. If the base revision number 414 is greater than the translation revision number 424, then the check box 708 is checked to indicate that a translation is requested since the original literal string was added or modified in the last update to the base application. On the other hand, if the base revision number 414 is equal the translation revision number 424, then the check box 708 is unchecked since this literal string was not modified in the last update to the base application.

Maintenance of the base revision numbers 414 and the translation revision number 414 enables the display of a check box 708 indicating the translation status to be easily determined. The check box 708 provides a benefit in allowing a translator to readily ascertain which of the literal strings of the new version are the few that have been added or modified strings and therefore need translation. To further lighten the translator's effort, the entries displayed in the master column 702 may be sorted by translation status. thereby clustering all the entries that require translation conveniently together.

The translation phrase view dialog box 700 also includes a transfer button 710, a save transaction button 712, and edit phrase button 714, and a cancel button 716. In response to activation of the transfer button 710 (marked with an arrow "-->"), the interactive translation tool 400 transfers the entry in the master column 702 to the entry in the target language 704. This operation is appropriate when a phrase is the same in two languages, for example "OK" in American English and French.

In response to activation of the edit phrase button 714, a translation edit view dialog box 720, shown in FIG. 7(b) is brought up for editing the translation of the currently selected entry. In one embodiment, double clicking on the entry is implemented as a user-interface synonym for activation of the edit phrase button 714. The translation edit view dialog box 720 includes a non-editable control 722 to display the base literal string of the master column 702, an editable control 724 to receive input for the translation, and another non-editable control 726 to display the entry of the reference column 706. Upon entry of a new translation, the translation revision number 424 is updated, and the corresponding check box 708 is unchecked. In another embodiment, editing the translation is allowed directly in the target language column 704 without recourse to the translation edit view dialog box 720.

Referring back to FIG. 7(a), activation of the save transaction button 712 causes the interactive translation tool 400 to save the entered translations, reflected in the target language column, into the phrase database 402. Activation of the cancel button 716 causes the entered translations to be discarded; however, if any changes were made, a warning dialog box is displayed to ask if the user would like save the changes.

The international language management system may also include an auditing component for translation support functions. The auditing component reports on the condition of the phrase database. For example, a language management report can be generated that includes such statistics as the number of phrases in the phrase database, the number of supported languages, the number of untranslated phrases for each language. the percentage of entries in the phrase database that are translated, and the translation percentage for a specific language. Thus. the auditing component assists in international language management. For example, the statistics are helpful in estimating translation costs which typically are a unit price per word or phrase.

### GENERATING A TARGET RESOURCE FILE

After the phrase database 402 has been updated, possibly over multiple editing sessions, language-specific target resource files are generated for selected national languages based on the base resource file 404 and the phrase database 402. More specifically, the base resource file 404 is parsed to identify each literal string and the associated identifier. The identifier is looked up in the phrase database 402 in the appropriate translation table 420 to fetch the corresponding translation. Then the literal string in the base resource file 404 is replaced by the fetched translation to produce the target resource file 406.

After the target resource file 406 has been produced by the interactive translation tool 400, inclusion of the target resource file 406 is attained by compiling the target resource file 406 by a resource compiler to produce the language-specific dynamic link library. This language-specific dynamic link library is capable of being loaded during run-time to provide support for on-the-fly language switching in a multilingual wheel alignment application.

While this invention has been described in connection with what is presently considered to be the most practical and preferred embodiment, it is to be understood that the invention is not limited to the disclosed embodiment, but on the contrary, is intended to cover various modifications and equivalent arrangements included within the spirit and scope of the appended claims.

## Claims

1. A computer-implemented method of maintaining a multilingual application, comprising:
building a database based on a source resource file for the multilingual application, said source resource file specifying a user interface component and an associated source language text for the application, and said database including a source language entry for the associated source language text and a corresponding target language entry;
presenting an interface for editing said database to produce a target language entry corresponding to the source language entry; and
generating a target resource file based on the source resource file and the target language entry for inclusion into a version of the multilingual application.

2. The method of claim 1, wherein said step of building the database includes:
parsing the source resource file to identify a source literal string of the source language text and a corresponding identifier; and
generating the source language entry to include the literal string and the identifier.

3. The method of claim 2, wherein generating the source language entry includes comparing the identifier with other identifiers corresponding to other source language entries in the database so as to maintain a single said source language entry for the identifier.

4. The method of claim 2, wherein generating the target resource file includes generating a target resource file based on the identifier in the source resource file and the target language entry corresponding to the identifier.

5. The method of claim 2, wherein presenting the interface for editing the phrase database includes:
displaying the source literal string for the source language entry in a first region: and
receiving a target literal string as input for the target language entry in a second region, said first region being visually associated with the second region.

6. The method of claim 5, wherein presenting the interface for editing the phrase database further includes displaying a status cell indicating whether or not the source language entry is up-to-date with respect to the target language entry, said status cell being visually associated with any of the first region and the second region.

7. The method of claim 6, further comprising determining whether the target language entry is up-to-date with respect to the source language entry by:
updating a source revision number when the source language entry is updated while building the database;
updating a target revision number when the target language entry is updated while presenting the interface for editing; and
comparing the source revision number and the target revision number.

8. The method of claim 6, further comprising grouping a plurality of source language entries together based on the whether or not the grouped source language entries are commonly up-to-date with respect to corresponding the target language entries.

9. The method of claim 5, wherein presenting the interface includes:
displaying the source literal string in the first region in a first column:
displaying the target literal string in the second region in a second column: and
displaying additional information based on the identifier in a third region in a third column, said third region being visually associated with any of the first region and the second region.

10. The method of claim 9, wherein:
generating the source language entry includes generating a context note identifying a user interface component encompassing the literal string; and
displaying additional information based on the identifier in a third column includes displaying the context note associated with literal string indicated by the identifier.

11. The method of claim 9, wherein displaying additional information based on the identifier in a third column includes displaying a third literal string belonging to another language.

12. The method of claim 1, further comprising generating a target language specific dynamic link library module to allow run-time switching of the multilingual application to the target language.

13. The method of claim 1, wherein the multilingual application is directed to a wheel alignment system.

14. A computer-readable medium bearing instructions for maintaining a multilingual application, said instructions arranged, when executed, to cause one or more processors to perform the steps of:
building a database based on a source resource file for the multilingual application, said source resource file specifying a user interface component and an associated source language text for the application, and said database including a source language entry for the associated source language text and a corresponding target language entry;
presenting an interface for editing said database to produce a target language entry corresponding to the source language entry; and
generating a target resource file based on the source resource file and the target language entry for inclusion into a version of the multilingual application.

15. A computer-implemented method of maintaining a multilingual vehicle servicing application, comprising:
parsing a source resource file for the multilingual vehicle servicing application to identify a source literal string and a corresponding identifier, said source resource file specifying a user interface component, the corresponding identifier, and the source literal string;
displaying the source literal string;
receiving a target literal string as input; and
generating the target resource file by replacing one or more literal strings in the source resource file associated with the identifier with the target literal string; and
generating a target language specific dynamic link library module to allow run-time switching of the multilingual vehicle servicing application to the target language.

16. A multilingual wheel alignment system comprising:
wheel alignment equipment including sensors mountable respectively on at least two wheels of a vehicle for measuring alignment angles of the wheels, said wheel alignment equipment configured for providing angle measurement signals indicative of an angle between planes of the wheels and a reference direction based on the measured alignment angles; and
a computer system coupled to the wheel alignment equipment configured for controlling the wheel alignment equipment and displaying operating instructions for the wheel alignment equipment based on the angle measurement signals in a first national language;
wherein the computer system includes a computer-readable medium storing a plurality of dynamic link libraries corresponding to respective national languages; and
wherein the computer system is configured to:
present a user interface for displaying a selection of the national languages and for receiving input selecting one of the national language,
load one of the dynamic link libraries corresponding to the selected national languages, and
redisplay during run time the operating instructions for the wheel alignment equipment in the selected national language based on said one of the dynamic link libraries corresponding to the selected national language.

17. The multilingual wheel alignment system of claim 16, wherein the computer system is further configured, in response to the input selecting one of the national languages, to close display components in the first national language and reload the display components in the selected national language.
